# DEMANDE DE BREVET EUROPEEN

(11) **EP 4 497 661 A1**
(43) Date de publication de la demande: **29.01.2025**
(21) Numéro de dépôt: 24183167.6
(22) Date de dépôt: 19.06.2024
(51) Int. Cl.: B62D 25/20, B60N 2/01, B60N 2/68

(54) **SOUBASSEMENT À FIXATION D' ASSISE DÉFORMABLE ET VÉHICULE COMPORTANT UN TEL SOUBASSEMENT**

(30) Priorité: 28.07.2023 FR 2308195
(71) Demandeur: Stellantis Auto SAS, 78300 Poissy (FR)
(72) Inventeur: KOZAK, ALBAN, 28410 BOUTIGNY PROUAIS (FR); PERU, MARC, 92290 CHATENAY MALABRY (FR); MERESSE, LUDOVIC, 25750 ARCEY (FR)
(74) Mandataire: BCIP

(57) **Abrégé**

Soubassement (1) de véhicule comportant un plancher d'assise (2) arrière destiné à recevoir une assise de siège arrière, des supports (4) d'assise comportant chacun un moyen de fixation destiné fixer l'assise de siège arrière, remarquable en ce que les supports (4) sont conformés pour se déformer de manière programmer de sorte à absorber une partie de l'énergie lors d'un choc provenant de l'assise sans déformer le plancher d'assise (2).

## Description

L'invention concerne un soubassement de véhicule comportant un plancher d'assise arrière destiné à recevoir une assise de siège arrière ainsi qu'un véhicule comportant un tel soubassement.

Les véhicules automobiles comportent classiquement une banquette arrière pour recevoir des passagers arrière. La banquette arrière comporte une assise fixée à un plancher d'assise. Afin de maintenir correctement ces passagers arrière en cas de choc avant, et d'éviter en particulier que le bassin des passagers passe sous la ceinture de sécurité, phénomène connue sous le nom de sous-marinage, il est connu de créer un bossage anti sous-marinage s'étendant transversalement sur l'avant du plancher d'assise supportant l'assise arrière. Le bossage rentre dans un évidement sous l'assise de la banquette.

Par exemple, le document FR3037011 décrit un véhicule comportant un tel plancher d'assise avec un bossage d'anti sous-marinage. Des renforts sont prévus pour renforcer le plancher d'assise, sur la face du plancher d'assise en vis-à-vis de l'assise, c'est-à-dire tournée vers l'intérieur du véhicule, qui s'étendent longitudinalement par rapport au véhicule, en suivant la forme du bossage. Ces renforts évitent la déformation du plancher d'assise en cas de choc.

L'inconvénient d'une telle solution est que ces renforts, disposés sous l'assise et le long du plancher d'assise, réduisent l'épaisseur de l'assise et par conséquence le confort des passagers arrière.

Il est par ailleurs connu de renforcer le bossage anti-sous marinage en plaçant un renfort transversal s'étendant sous le bossage, entre le bossage et une planche à talon formant une paroi verticale reliant le plancher d'assise au plancher du véhicule. Ce renfort transversal évite la déformation du plancher d'assise, notamment au niveau de sa jonction avec la planche à talon.

L'inconvénient d'une telle solution est qu'elle réduit le volume disponible sous le plancher d'assise, notamment sous le bossage. Or, ce volume sous le plancher d'assise et le bossage anti sous-marinage est utilisé pour disposer des équipements tels que des équipements électriques ou une batterie, notamment dans le cas de véhicule électrique ou hybride. L'installation d'un renfort dans ce volume réduit le volume disponible pour installer ces équipements.

De plus, la taille importante de ces différents renforts augmente la masse du véhicule.

L'objectif de l'invention est de remédier à ces inconvénients. En particulier, un des buts de l'invention est de proposer un soubassement de véhicule permettant d'offrir un volume important sous le plancher d'assise tout en assurant le confort et la sécurité des passagers, et en réduisant les risques de déformation du plancher d'assise en cas de choc avant lors de la retenu des passagers évitant le phénomène d'anti sous-marinage.

Ce but est atteint selon l'invention grâce à un soubassement de véhicule comportant un plancher d'assise arrière destiné à recevoir une assise de siège arrière, des supports d'assise comportant chacun un moyen de fixation destiné à fixer l'assise de siège arrière, remarquable en ce que les supports sont conformés pour se déformer de manière programmée de sorte à absorber une partie de l'énergie lors d'un choc provenant de l'assise sans déformer le plancher d'assise.

Ainsi avantageusement, en cas de choc avant d'un véhicule comportant un tel soubassement et un siège arrière avec une assise disposée sur le plancher d'assise arrière, une partie de l'énergie provenant de passagers retenus sur l'assise arrière est absorbée dans la déformation programmée des supports. C'est à dire que lors d'un choc, le support se déforme à partir d'un certain niveau d'effort de sorte à transmettre en effort maximum donné vers le plancher. L'effort transmis au plancher est réduit, et les besoins de renforcement dudit plancher sont eux aussi réduit, de sorte à permettre de se passer de renfort sous le plancher d'assise, libérant de l'espace sous le plancher, ou sur le plancher d'assise, offrant ainsi la possibilité d'augmenter l'épaisseur d'une banquette installée sur le plancher d'assise.

Dans un mode de réalisation particulier de l'invention, le plancher d'assise arrière comporte un bossage d'anti sous-marinage s'étendant transversalement sur l'avant du plancher d'assise, et dont les supports d'assise sont fixés au plancher d'assise sur le bossage, de préférence au sommet du bossage.

Ainsi avantageusement, en cas de choc avant, les efforts issus de la retenue contre le sous-marinage des passagers en cas de choc, provenant de l'assise, s'appliquant plus particulièrement au niveau du bossage et de son sommet, un positionnement des supports au sommet du bossage est avantageux en ce qu'ils sont proches de la zone dans laquelle ces efforts de retenus sont appliqués. De plus, le bossage empêche le phénomène de sous-marinage des passagers lorsque l'assise, disposée au-dessus du plancher, ne suffit pas à retenir les passagers. Ce bossage permet en outre de créer un volume pour installer différents équipements.

Dans un autre mode de réalisation de l'invention, chacun des supports est formé par une pièce en tôle emboutie.

Ainsi avantageusement, les supports sont réalisés de manière simple et rapide, et potentiellement en même temps que d'autres pièces en tôle emboutie formant le soubassement.

Dans un autre mode de réalisation de l'invention, chacun des supports forme une boîte avec le plancher d'assise, chaque support comportant une paroi supérieure distante et en vis-à-vis du plancher d'assise et des parois latérales reliant la paroi supérieure au plancher d'assise, les parois latérales formant des côtés latéraux du support, la paroi supérieure de chaque support comportant le moyen de fixation destiné à fixer l'assise du siège arrière.

Dans un mode de réalisation particulier de l'invention, la boîte est ouverte sur un de ces côtés latéraux, les autres côtés latéraux étant fermées par les parois latérales.

Ainsi avantageusement, la déformation programmée du support est obtenue de manière simple. En effet, le fait que la boîte comporte un côté latéral ouvert, c'est-à-dire sans paroi latérale, affaiblie le support. En cas de choc, la paroi supérieure se déforme de manière programmée par l'absence de paroi latérale sur son côté latéral ouvert, tout en étant maintenue au plancher d'assise par les parois latérales reliant la paroi supérieure au plancher sur les autres côtés latéraux.

Dans un mode de réalisation particulier de l'invention, le côté ouvert de la boîte est orienté vers l'avant du soubassement, correspondant à l'avant du véhicule comportant un tel soubassement, les autres côtés latéraux étant fermés par les parois latérales.

Ainsi avantageusement, les efforts en cas de choc provenant de la banquette sur les supports étant orientés verticalement, vers le bas et vers l'avant du soubassement, en se plaçant dans le référentiel d'un véhicule comportant ledit soubassement, la paroi supérieure se déforme avec des niveaux d'efforts contrôlés, en s'affaissant vers le bas, permettant une meilleure absorption d'énergie. De plus, la boîte se déforme de manière symétrique par rapport à l'axe transversal du véhicule, assurant une bonne stabilité du support lors de sa déformation. En outre, le fait que les autres côtés latéraux soient formés par les parois latérales reliant la paroi supérieure au plancher d'assise, les risques que les supports se détachent du plancher vis-à-vis des efforts dirigés vers l'avant du soubassement, dans le sens longitudinal au soubassement, sont réduits.

Dans un autre mode de réalisation de l'invention, les parois latérales comportent à leur extrémité opposée à la paroi supérieure, des bords tombés, le support étant fixé au plancher d'assise par ces bords tombés, de préférence par soudage pour des supports en tôle métallique.

Ainsi avantageusement, les supports sont fixés de manière simple et facile au plancher, les bords tombés offrant une surface pour fixer les supports au plancher d'assise. En particulier, lorsque les supports sont en tôle métallique, leur fixation au soubassement peut être intégrées dans des étapes de ferrages dans lesquelles l'ensemble du soubassement est assemblé.

L'invention porte également sur un véhicule comportant un soubassement tel que décrit précédemment, et un siège arrière comportant une assise disposée sur le plancher d'assise, l'assise du siège arrière comportant des interfaces de fixation coopérant chacune avec l'un des moyens de fixation de sorte à fixer l'assise au support.

Dans un mode de réalisation particulier de l'invention, l'assise de siège arrière comporte une armature rigide, sur laquelle est disposée une matelassure en mousse, l'armature comportant les interfaces de fixation coopérant avec les moyens de fixation.

Ainsi avantageusement, la structure rigide de l'assise permet un transfert et une répartition efficace des efforts de retenu des passagers sur les supports en cas de choc.

Dans un mode de réalisation particulier de l'invention, l'armature rigide est un assemblage de fils rigides recevant la matelassure.

Ainsi avantageusement, le véhicule comporte une assise de siège arrière dont l'armature est simple, légère et peu chère, tout en permettant une retenue des passagers contre le sous-marinage, et en évitant la déformation du plancher d'assise.

L'invention sera mieux comprise à la lecture de la description qui va suivre, donnée uniquement à titre d'exemple et faite en se référant aux dessins annexés, sur lesquels :
[Fig.1] représente une vue en perspective d'un soubassement suivant l'invention équipé d'une assise de siège arrière dont seule l'armature est visible
[Fig.2] représente une vue d'un support d'assise du soubassement de la figure 1 avant un choc.
[Fig.3] représente une vue de dessus d'un support 4.
[Fig.4] représente une vue d'un support d'assise selon la figure 2 déformée après un choc.

Les dessins sont des représentations schématiques pour faciliter la compréhension de l'invention. Les composants ne sont pas forcément représentés à l'échelle. Les mêmes références correspondent aux mêmes composants d'une figure à l'autre.

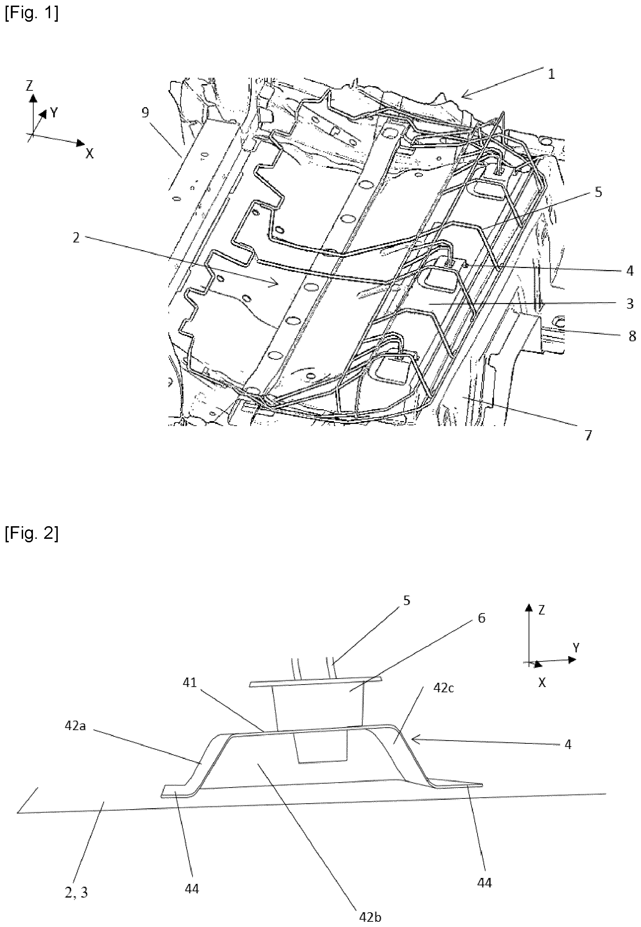

La figure 1 représente une partie d'un soubassement 1 d'un véhicule suivant l'invention, au niveau d'un plancher d'assise arrière 2 de véhicule. L'axe X représente la direction longitudinale du véhicule, l'axe Y la direction transversale et l'axe Z la direction verticale. Les directions avant, arrière, haut, bas sont prises dans le référentiel du véhicule. Le soubassement 1 correspond à la partie inférieure d'une structure d'un véhicule, comprenant de manière non exhaustive des longerons, des brancards, des planchers, des fixations de trains roulant, des éléments de suspension et des systèmes de propulsion, des fixations pour des sièges recevant des passagers. Le soubassement 1 reçoit classiquement une superstructure, ou structure supérieure, de sorte à former une caisse en blanc, non illustrée dans les figures.

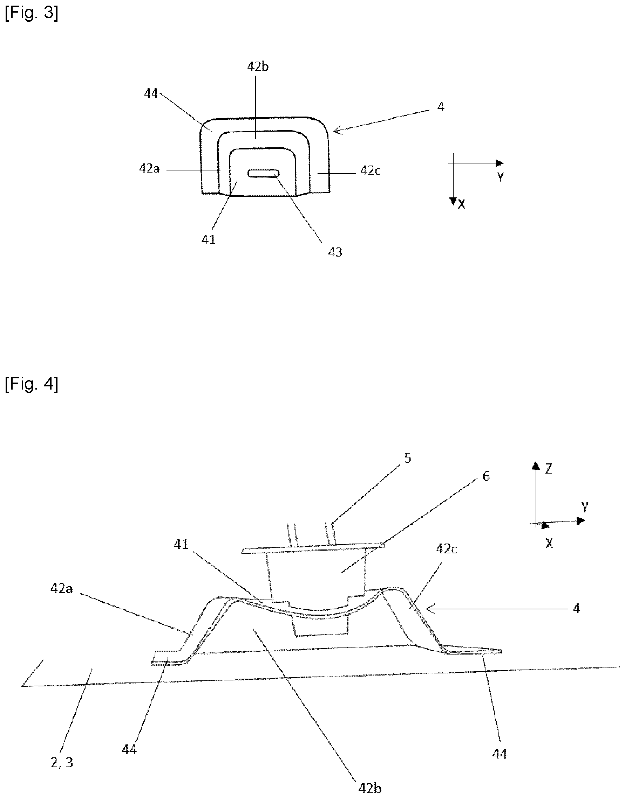

Le plancher d'assise 2 correspond à la partie du plancher du véhicule disposée sous l'assise arrière. Le plancher d'assise 2 est disposé entre un plancher avant 8 du véhicule et un plancher de coffre 9 disposé à l'arrière du véhicule, et est disposé plus haut que le plancher avant 8 auquel il est relié par une planche à talon 7 disposée dans un plan transversal Y et vertical Z au véhicule. Le plancher d'assise 2 arrière est destiné à recevoir l'assise de siège arrière. Comme illustré dans la figure 1, le plancher arrière 2 comporte des supports 4 d'assise comportant chacun un moyen de fixation 43, illustré en figure 3, pour fixer l'assise de siège arrière au plancher d'assise 2. Les supports 4 sont conformés pour se déformer de manière programmée de sorte à absorber une partie de l'énergie lors d'un choc provenant de l'assise sans déformer le plancher d'assise 2. C'est-à-dire que leur résistance mécanique est inférieure à la résistance mécanique de la zone du plancher d'assise 2 sur laquelle ils sont fixés, de sorte à se déformer à partir d'un effort donné tandis que sous le même effort le plancher d'assise 2 ne se déforme pas.

On entend par siège une banquette ou un ensemble de sièges individuels. L'assise peut être d'un seul tenant, par exemple dans le cas d'une banquette, ou en plusieurs parties.

Dans le mode de réalisation de la figure 1, le plancher d'assise 2 arrière comporte un bossage 3 d'anti sous-marinage s'étendant transversalement sur l'avant du plancher d'assise 2. Les supports 4 d'assise sont fixés au plancher d'assise 2 sur le bossage 3, au sommet du bossage 3.

En figure 1, le soubassement 1 comporte trois supports 4. En variante, le soubassement 1 comporte un nombre différent de supports 4. L'homme du métier choisira le nombre de supports 4 en fonction par exemple de la forme de l'assise à fixer.

Les supports 4 sont par exemple réalisés en tôle emboutie. Par exemple, le support 4 est réalisée dans une tôle en matériau similaire à celui du plancher d'assise 2 : si le plancher d'assise 2 est une tôle d'acier, les supports 4 sont aussi en tôle d'acier, mais il n'est pas nécessairement dans un même grade d'acier.

Chacun des supports 4 forme une boîte avec le plancher d'assise 2. Chaque support 4 comporte ainsi une paroi supérieure 41 distante et en vis-à-vis du plancher d'assise 3 et des parois latérales 42a, 42b, 42c reliant la paroi supérieure 41 au plancher d'assise 2, les parois latérales 42a, 42b, 42c formant des côtés latéraux du support 4. La paroi supérieure 41 de chaque support 4 comporte le moyen de fixation 43 destiné à fixer l'assise du siège arrière.

Comme illustré en figures 1 à 4, chaque support 4 forme une boîte ouverte sur un de ces côtés latéraux. C'est-à-dire que tous les côtés latéraux de la boîte, sauf un, sont fermés par les parois latérales 42a, 42b, 42c.

Dans le mode de réalisation des figures, chaque support 4 forme une boîte en parallélépipède, la paroi supérieure 41 étant de forme sensiblement rectangulaire. La boîte formée comporte ainsi quatre côtés latéraux, dont trois des côtés latéraux sont fermées par chacune des parois latérales 42a, 42b, 42c, l'un des côtés latéraux étant dépourvu de paroi latérale et donc dit ouvert. Dans le mode de réalisation illustré dans les figures, le côté ouvert de la boîte formée par le support 4 et le plancher d'assise est orienté vers l'avant du soubassement 1, c'est-à-dire faisant face à l'avant du véhicule, les autres côtés latéraux étant fermés par les parois latérales 42a, 42b, 42c. Dans le mode de réalisation des figures, les parois latérales 42a, 42b, 42c sont de biais par rapport à la paroi supérieure 41 et au plancher d'assise 2, de sorte à donner une forme de tronc conique à base rectangulaire au support 4.

Les parois latérales 42a, 42b, 42c de la boîte comportent à leur extrémité opposée à la paroi supérieure 41, des bords tombés 44. Le support 4 est fixé au plancher d'assise par ces bords tombés 44. Dans le cas de supports 4 réalisés en tôle métallique, lesdits supports 4 sont par exemple fixés par des points de soudage au plancher d'assise 2. D'autres solutions connues de l'homme du métier pour fixer les supports 4 au plancher d'assise 2 sont envisageables.

L'invention porte également sur un véhicule comportant un tel soubassement 1 et un siège arrière comportant une assise disposée sur le plancher d'assise 2. L'assise du siège arrière comporte des interfaces de fixation 6 coopérant chacune avec l'un des moyens de fixation 43 des supports 4 de sorte à fixer l'assise au support 4.

Comme illustré en figure 1, l'assise de siège arrière comporte une armature rigide 5, sur laquelle est disposée une matelassure en mousse recouverte de tissu - non représentée dans les figures -, l'armature 5 comportant les interfaces de fixation 6 coopérant avec les moyens de fixation 43. L'armature rigide 5 est par exemple un assemblage de fils rigides recevant la matelassure tel que représentée en figure 1. Une telle armature rigide est par exemple un assemblage de fils rigides propre à recevoir un coussin et comportant une partie avant munie de premières pattes d'ancrage propres à être introduites de haut en bas, dans les supports 4, les pattes d'ancrages comportant les interfaces de fixation 6. L'armature 5 est dimensionnée de manière à assurer la retenue du bassin de l'occupant, par exemple réalisée par des fils métalliques de diamètre 5mm. Le maillage de cette armature est en variante optimisé pour avoir des fils transversaux assemblés sur des fils longitudinaux suffisamment resserrés en vis du bassin des occupants. Une telle armature est par exemple décrite dans le document FR3014380.

Le moyen de fixation 43 sur chaque support 4 est par exemple une ouverture 43 comme illustré en figure 3, dans laquelle s'insère l'interface de fixation 6 de l'armature 5. L'interface de fixation est par exemple une patte de clippage 6 coopérant avec les bords de l'ouverture 43, et comportant une surface d'appui s'appuyant sur la paroi supérieure 41 du support 4.

La figure 2 illustre une vue d'un des supports 4 avant un choc avant du véhicule, vue de l'avant c'est-à-dire en vis-à-vis du côté latéral ouvert de la boîte formée par le support 4 et le plancher d'assise 2. La paroi supérieure 41 du support 4 est plane, sensiblement parallèle à la surface du plancher d'assise 2, et s'étend dans cette illustration dans un plan horizontale parallèle aux axes longitudinal X et transversal Y. La figure 4 illustre le support 4 de la figure 2 après un choc avant : la paroi supérieure 41 s'est affaissée, courbée vers le bas, se rapprochant du plancher 2, et les parois latérales 42a et 42c disposées de chaque côté du côté ouvert se sont penchés davantage vers le plancher d'assise 2. La déformation du support 4 est plus grande du côté ouvert de la boîte formée par le support 4 et le plancher 2 que du côté opposé à ce côté ouvert, du fait de l'absence de paroi latérale sur ce côté ouvert.

La Figure 1 représente un plancher d'assise avec un bossage d'anti sous-marinage. En variante, le plancher d'assise 2 peut ne pas comporter de bossage 3. Dans cette variante, les supports 4 sont fixés par exemple sur l'avant du plancher d'assise, à proximité de la liaison avec la planche à talon 7. 1

## Revendications

1. Soubassement (1) de véhicule comportant un plancher d'assise (2) arrière destiné à recevoir une assise de siège arrière, des supports (4) d'assise comportant chacun un moyen de fixation (43) destiné à fixer l'assise de siège arrière, **caractérisé en ce que** les supports (4) sont conformés pour se déformer de manière programmée de sorte à absorber une partie de l'énergie lors d'un choc provenant de l'assise sans déformer le plancher d'assise (2).

2. Soubassement (1) suivant la revendication 1, dont le plancher d'assise (2) arrière comporte un bossage (3) d'anti sous-marinage s'étendant transversalement sur l'avant du plancher d'assise (2), et dont les supports (4) d'assise sont fixés au plancher d'assise (2) sur le bossage (3), de préférence au sommet du bossage (3).

3. Soubassement (1) suivant la revendication précédente, dont chacun des supports (4) est formé par une pièce en tôle emboutie.

4. Soubassement (1) suivant l'une des revendications précédentes, dont chacun des supports (4) forme une boîte avec le plancher d'assise (2), chaque support (4) comportant une paroi supérieure (41) distante et en vis-à-vis du plancher d'assise (2) et des parois latérales (42a, 42b, 42c) reliant la paroi supérieure (41) au plancher d'assise (2), les parois latérales (42a, 42b, 42c) formant des côtés latéraux du support, la paroi supérieure (41) de chaque support (4) comportant le moyen de fixation (43) destiné à fixer l'assise du siège arrière.

5. Soubassement (1) suivant la revendication précédente, dont la boîte est ouverte sur un de ces côtés latéraux, les autres côtés latéraux étant fermées par les parois latérales (42a, 42b, 42c).

6. Soubassement (1) suivant la revendication précédente, dont le côté ouvert de la boîte est orienté vers l'avant du soubassement (1), correspondant à l'avant du véhicule comportant un tel soubassement (1), les autres côtés latéraux étant fermés par les parois latérales (42a, 42b, 42c).

7. Soubassement (1) suivant l'une des revendications de 4 à 6, dont les parois latérales (42a, 42b, 42c) comportent à leur extrémité opposée à la paroi supérieure (41), des bords tombés (44), le support (4) étant fixé au plancher d'assise par ces bords tombés (44), de préférence par soudage pour des supports en tôle métallique.

8. Véhicule comportant un soubassement (1) suivant l'une des revendications de 1 à 7, et un siège arrière comportant une assise disposée sur le plancher d'assise (2), l'assise du siège arrière comportant des interfaces de fixation (6) coopérant chacune avec l'un des moyens de fixation (43) de sorte à fixer l'assise au support (4).

9. Véhicule suivant la revendication 8, dont l'assise de siège arrière comporte une armature rigide (5), sur laquelle est disposée une matelassure en mousse, l'armature (5) comportant les interfaces de fixation (6) coopérant avec les moyens de fixation (43).

10. Véhicule suivant la revendication 9, dont l'armature rigide (5) est un assemblage de fils rigides recevant la matelassure. 1
